# EUROPÄISCHE PATENTSCHRIFT

(11) **EP 2 952 316 B1**
(45) Veröffentlichungstag und Bekanntmachung des Hinweises auf die Patenterteilung: **11.10.2017**
(21) Anmeldenummer: 14001915.9
(22) Anmeldetag: 03.06.2014
(51) Int. Cl.: B29C 33/06, B29C 35/08, B29C 70/38

(54) **FASERAUFTRAGWERKZEUG, FASERVERLEGEVORRICHTUNG, FASERVERLEGEVERFAHREN UND HERSTELLVERFAHREN**
FIBRE APPLICATION TOOL, FIBRE LAYING DEVICE, FIBRE LAYING METHOD AND PRODUCTION METHOD
OUTIL D'APPLICATION DE FIBRE, DISPOSITIF DE POSE DE FIBRE, PROCÉDÉ DE POSE DE FIBRE ET PROCÉDÉ DE FABRICATION

(43) Veröffentlichungstag der Anmeldung: 09.12.2015
(73) Patentinhaber: Airbus Defence and Space GmbH, 85521 Ottobrunn (DE)
(72) Erfinder: ENGEL, Franz, 81539 München (DE)
(74) Vertreter: Kastel, Stefan

(56) Entgegenhaltungen:
- EP-A1- 1 749 631
- WO-A1-2014/107555
- DE-A1-102007 009 124
- US-A1- 2011 011 538

## Beschreibung

Die Erfindung betrifft ein Faserauftragwerkzeug für einen Faserverlegeprozess, mit einem Faserkontaktflächenbereich, der eine Faserkontaktfläche zum Kontaktieren von Fasern zwecks Umlenken und/oder Anpressen von Fasern zum Auftragen auf eine Arbeitsoberfläche hat, und mit einer Aktivierungseinrichtung zum Aktivieren eines an den Fasern vorgesehenen Haft-, Matrix-, Harz- oder Bindermaterials mittels einer Aktivierungsstrahlung, um ein Anhaften der Fasern auf der Arbeitsoberfläche zu bewirken. Weiter betrifft die Erfindung eine Faserverlegevorrichtung zum vorzugsweise automatischen Durchführen eines Faserverlegeverfahrens, die ein solches Faserauftragwerkzeug aufweist. Weiter betrifft die Erfindung ein Faserverlegeverfahren und ein Herstellverfahren zur Herstellung von Werkstücken aus faserverstärktem Material unter Verwendung eines solchen Faserverlegeverfahrens.

Ein bevorzugtes Verwendungsgebiet eines erfindungsgemäßen Faserauftragwerkzeugs sind automatische Faserverlegeverfahren, wie sie unter den Begriff "Automatic Fibre Placement" - kurz AFP bekannt sind.

Derartige für AFP geeignete Faserauftragwerkzeuge, Faserverlegevorrichtungen und entsprechende Fibre-Placement-Verfahren sind z.B. aus den folgenden Internetvideos bekannt:
http://www.youtube.com/watch?v=-qAaJwm11dg, veröffentlicht am 14.11.2011
http://www.youtube.com/watch?v=DV1n35pabXs, veröffentlicht am 03.05.2013
http://www.youtube.com/watch?v=QDbrVTWnFIU, veröffentlicht am 03.01.2009.

Beispiele aus der Patentliteratur von derartigen für Automatic-Fibre-Placement geeigneten Faserauftragwerkzeugen und Faserverlegevorrichtungen sind in der EP 0 491 353 A1 oder der EP 2 882 681 A1 beschrieben und gezeigt.

Beim Automatic-Fibre-Placement-Verfahren werden Fasern von einer Rolle oder dergleichen, die im Bereich eines Kopfes eines Bewegungsapparates - wie zum Beispiel Roboterarm - angeordnet sind, abgerollt und mit einem Faserauftragwerkzeug in Form einer Faserauftragsrolle oder Kompaktierrolle auf einer Arbeitsoberfläche in gewünschter Orientierung und Anordnung verlegt. Ein Außenumfangbereich der Rolle dient hierzu als Faserkontaktfläche zum Umlenken, Auftragen und Anpressen der Fasern An dem Verlegekopf sind somit neben einer Faserliefereinrichtung zum Liefern von Endlosfasern oder Fasermaterialbändern auch das Faserauftragwerkzeug, eine Schneideinrichtung zum Schneiden der Fasern und weiter noch eine Aktivierungseinrichtung vorgesehen. Damit die Fasern auf der Arbeitsoberfläche anhaften, ist das Fasermaterial mit einem Binder oder einem Harz oder dergleichen versehen, wobei dieses Haftmaterial beispielsweise durch Wärme oder Aktivierungsstrahlen aktivierbar ist, damit es ein Anhaften der verlegten Fasern bewirkt. Auch diese Aktivierungseinrichtungen sind an dem Kopf mitfahrend vorhanden.

Demnach werden beim Fibre-Placement abhängig vom verwendeten Material Energiequellen - sogenannte Aktivierungseinheiten oder Aktivierungseinrichtungen - eingesetzt, um den Binder oder das Harz auf dem Fasermaterial anzuschmelzen. Das Fasermaterial mit dem angeschmolzenen Binder beziehungsweise angeschmolzenen Harz wird dann mittels einer Rolle auf die Arbeitsoberfläche - beispielsweise eines Toolings - gedrückt. Hierbei erfolgt auch eine Kompaktierung. Druck und Aktivierung müssen so eingestellt werden, dass das Fasermaterial auf dem Tooling fixiert wird. Die Aktivierungseinheit muss das Fasermaterial schnell genug auf die benötigte Temperatur bringen, damit es zum Zeitpunkt der Kompaktierung angeschmolzen genug ist.

Wie aus dem vorerwähnten Stand der Technik bekannt, sind zur Aktivierung folgende Verfahren etabliert:
- Laser, um das Tooling - d.h. die Arbeitsoberfläche - vor der Rolle zu erwärmen;
- Infrarot, um das Tooling - d.h. die Arbeitsoberfläche - vor der Rolle zu erwärmen;
- eine beheizte Rolle, um direkt den Binder beziehungsweise das Harz zu aktivieren; oder
- Heißgas, um den Binder beziehungsweise das Harz zu aktivieren und das Tooling beziehungsweise die Arbeitsoberfläche vorzuheizen.

Demnach fahren auf dem mittels des Bewegungsapparates bewegten Verlegekopf auch die Aktivierungseinheiten mit; hierzu ist beispielsweise eine Aktivierungseinrichtung zum Aussenden von Aktivierungsstrahlen - Laserstrahlung oder LED-Infrarotlicht oder dergleichen - auf die Arbeitsoberfläche zum Vorerwärmen desselben angeordnet.

Aus der US 2011/0011538 A1 ist eine Faserverlegevorrichtung mit einem Faserauftragswerkzeug bekannt, das eine Auftragsrolle aufweist. Dabei wird Laserlicht von außen aufgestrahlt. Die Auftragsrolle ist für die Hitzestrahlung transparent, um Wärmestaus an der Auftragsrolle zu vermeiden.

Aus der DE 10 2007 009 124 A1 ist ein Faserauftragswerkzeug mit einer Auftragsrolle bekannt. Dabei erfolgt eine Aktivierung mittels eines magnetischen Wechselfeldes und der dadurch erfolgenden Erwärmung. Hierzu kann eine Spule innerhalb der Auftragsrolle angeordnet sein. Das Magnetfeld der Spule wirkt durch die Auftragsrolle hindurch.

Aus der EP 1 749 631 A1 ist es bekannt, mehrere Schichten von Verbundmaterial zwischen Presswalzen zusammenzupressen. Sichtbares Licht kann als Energie zum Aushärten eingesetzt werden; dabei ist auch erwähnt, das Licht durch die Walzen zu leiten.

Aus der zum Stand der Technik nach Artikel 54 (3) EPÜ zu rechnenden WO 2014/107555 A1 ist ein induktives Aktivieren durch eine Kompaktierrolle hindurch bekannt.

Die bekannten Faserverlegevorrichtungen weisen somit einen sehr voluminösen und schweren Verlegekopf auf. Im Falle einer erwärmten Rolle ist eine gezielte Aktivierung und eine Handhabung schwierig. Insgesamt wird bei den bekannten Verlegeverfahren auch relativ viel Energie zur Aktivierung benötigt.

Die vorliegende Erfindung wendet sich einer entsprechenden Verbesserung von insbesondere für AFP, aber auch für andere Faserverlegeverfahren mit aktivierbaren Bindern oder dergleichen geeigneten Faserverlegevorrichtungen und Faserverlegeverfahren zu.

Hierzu schlägt die Erfindung ein Faserauftragwerkzeug, eine Faserverlegevorrichtung, ein Faserverlegeverfahren und ein Herstellverfahren gemäß den unabhängigen Ansprüchen vor.

Vorteilhafte Ausgestaltungen der Erfindung sind Gegenstand der Unteransprüche.

Gemäß einem ersten Aspekt schafft die Erfindung ein Faserauftragwerkzeug für einen Faserverlegeprozess - insbesondere für ein Fibre Placement-Verfahren oder AFP-Verfahren -, mit einem Faserkontaktflächenbereich, dere eine Faserkontaktfläche zum Kontaktieren von Fasern zwecks Umlenken und/oder Anpressen von Fasern zum Auftragen auf eine Arbeitsoberfläche hat, und mit einer Aktivierungseinrichtung zum Aktivieren eines an den Fasern vorgesehenen Haft-, Matrix-, Harz- oder Bindermaterials mittels einer Aktivierungsstrahlung, um ein Anhaften der Fasern auf der Arbeitsoberfläche zu bewirken, wobei der Faserkontaktflächenbereich für die Aktivierungsstrahlung transparent ist und wobei die Aktivierungseinrichtung ausgebildet und eingerichtet ist, die Aktivierungsstrahlung durch den transparenten Faserkontaktflächenbereich hindurch zu den mittels der Faserkontaktfläche anzupressenden Fasern zu leiten und/oder zu liefern.

Unter "Fasern" sind hier Fasermaterialien in unterschiedlicher Form gemeint, auch in Form von Faserbändern oder Fasergewebebänder oder dergleichen.

Es ist weiter vorgesehen, dass die Faserkontaktfläche am Umfang einer Faserauftrag- und/oder Kompaktierungsrolle ausgebildet ist, dass wenigstens ein die Faserkontaktfläche aufweisender Umfangsflächenbereich der Faserauftrag- und/oder Kompaktierungsrolle transparent ausgebildet ist und dass die Aktivierungseinrichtung dazu ausgebildet und eingerichtet ist, die Aktivierungsstrahlung vom Inneren der Faserauftrags- und/oder Kompaktierungsrolle aus durch den transparenten Umfangsflächenbereich auf die zu aktivierenden, im bestimmungsgemäßen Gebrauch den Umfangsflächenbereich kontaktierenden Fasern zu leiten.

Es ist bevorzugt, dass eine den Faserkontaktflächenbereich bildende oder den Faserkontaktfläche am Außenumfang aufweisende zylindermantelförmige umlaufende Umfangswandung der Faserauftrag- und/oder Kompaktierrolle aus transparentem Material, aus transparentem Kunststoff und/oder aus Glas gebildet ist.

Es ist bevorzugt, dass die Faserauftrag- und/oder Kompaktierrolle einen relativ zu einem Verlegekopf oder dergleichen nicht drehbaren inneren Lagerabschnitt, der an einem Bewegungsapparat zum relativen Bewegen über die Arbeitsoberfläche anzubringen ist, und einen relativ zu dem Lagerabschnitt drehbaren den Lagerabschnitt umfänglich umgebenden Rohrkörper oder Rollenkörper aufweist, der zumindest teilweise aus transparenten Material gebildet ist, wobei die Aktivierungseinrichtung an dem inneren Lagerabschnitt angeordnet ist.

Es ist bevorzugt, dass die Aktivierungseinrichtung derart ausgebildet und eingerichtet ist, dass die Aktivierungsstrahlung durch den transparente Umfangsbereich in einem Winkelbereich geleitet wird, an dem Fasern an der Rolle umgelenkt wird und der in Rollrichtung vor dem Kontaktbereich liegt, wo die Faser kontaktierend aufgetragen wird.

Bei einer möglichen Ausgestaltung ist vorgesehen, dass die Aktivierungseinrichtung eine interne Lichtquelle und/oder eine interne LED in dem Faserauftragwerkzeug zum Liefern der Aktivierungsstrahlung aufweist. Dadurch kann die Aktivierungsstrahlung im Inneren des Faserauftragwerkzeugs erzeugt werden.

Alternativ ist vorgesehen, dass die Aktivierungseinrichtung eine externe Strahlenquelle für die Aktivierungsstrahlung, wie z.B. eine externe Lichtquelle und/oder eine externe LED, mit der die Aktivierungsstrahlung wie z.B. Lichtstrahlung außerhalb des Faserauftragswerkzeug erzeugbar ist, nutzt und eine Leiteinrichtung zum Leiten der Aktivierungsstrahlung von der Strahlenquelle ins Innere des Faserauftragwerkzeugs aufweist. Die Leiteinrichtung kann eine Lichtleiteinrichtung, wie z.B. eine Glasfaser oder einen Lichtleiter, aufweisen. Die Lichtleiteinrichtung kann auch eine Lichtstrecke mit Umlenkspiegeln oder dergleichen umfassen. Mit dieser Option kann man leicht auf die Strahlenquelle zugreifen und ist in den Dimensionen freier, dennoch ist ein sehr kompaktes Faserauftragwerkzeug mit Lieferung der Strahlung vom Inneren aus durch die transparente Faserkontaktfläche hindurch möglich.

Bei beiden Optionen der internen und der externen Strahlerzeugung ist vorgesehen, dass die Aktivierungseinrichtung eine Fokussiereinrichtung zum Fokussieren der Aktivierungsstrahlung auf die oder nahe der die Faserkontaktfläche bildende Außenoberfläche des Faserkontaktflächenbereichs aufweist. Eine Fokussiereinrichtung ist insbesondere dann vorteilhaft, wenn die Strahlungsintensität relativ gering ist.

Es ist bevorzugt, dass die Fokussiereinrichtung wenigstens eine Fokussierlinse aufweist, um die die Faserkontaktfläche kontaktierenden Fasern durch den transparenten Faserkontaktflächenbereich hindurch direkt zu bestrahlen.

Es ist bevorzugt, dass die Abstände zwischen der Lichtquelle und/oder der LED einerseits und der wenigstens einen Fokussierlinse andererseits so gewählt sind, dass der Fokuspunkt direkt auf der Faserkontaktfläche liegt.

Es ist bevorzugt, dass die interne Lichtquelle und/oder LED und/oder die Fokussiereinrichtung und/oder ein Ausgang der Strahltungsleiteinrichtung in der Faserauftrag- und/oder Kompaktierrolle angeordnet sind.

Gemäß einem weiteren Aspekt schafft die Erfindung eine automatische Faserverlegevorrichtung zum automatischen Verlegen von Fasern auf einer Arbeitsoberfläche, umfassend:
eine Faserliefereinrichtung zum Liefern von Fasern, insbesondere in Form von von einer Faserrolle abzuwickelnden Endlosfasern oder in Form eines Faserbandes oder Fasergewebebandes,
einem Faserauftragwerkzeug nach einer der voranstehenden Ausgestaltungen, einer Schneideinrichtung zum Schneiden der Fasern auf eine gewünschte Länge, und einem Bewegungsapparat zum Bewegen des Faserauftragwerkzeugs relativ zu der Arbeitsoberfläche, um die von der Faserliefereinrichtung gelieferten Fasern auf der Arbeitsoberfläche aufzutragen und aufzupressen.

Gemäß einem weiteren Aspekt schafft die Erfindung ein Faserverlegeverfahren zum automatischen Verlegen von Fasern auf einer Arbeitsoberfläche, umfassend:
a) Auftragen und Anpressen von mit Haft-, Binder-, Matrix- oder Harzmaterial versehenen Fasern mit einer transparenten Faserkontaktfläche und
b) Leiten von Aktivierungsstrahlung durch die Faserkontaktfläche hindurch zum Aktivieren des Haft-, Binder-, Matrix- oder Harzmaterials.

Es ist bevorzugt, dass Schritt b) vor Schritt a) erfolgt.

Es ist weiter vorgesehen, dass Schritt a) umfasst:
Auftragen und Anpressen der Fasern mittels einer Faserauftrags- und/oder Kompaktierungsrolle, die an wenigstens einen transparenten Umfangsflächenbereich aufweist, und
dass Schritt b) umfasst:
   Leiten der Aktivierungsstrahlung durch den transparenten Umfangsbereich hindurch.

Weiter ist der Schritt vorgesehen: Liefern der Fasern zu der Faserauftrags- und/oder Kompaktierungsrolle und Umlenken der Fasern an einer zum Umlenken ausgebildeten Faserkontaktfläche bis hin zu einem Kontakt mit der Arbeitsfläche, wobei die Aktivierungsstrahlung in dem Bereich der Umlenkung noch vor dem Kontakt mit der Arbeitsoberfläche durch die Faserkontaktfläche und auf die Fasern geleitet wird.

Gemäß einem weiteren Aspekt schafft die Erfindung ein Herstellverfahren zum Herstellen von Verbundwerkstoffwerkstücke, mit den Schritten:
Herstellen einer Preform durch Durchführen des automatischen Faserverlegeverfahrens nach einem der voranstehenden Ausführungsformen, und Herstellen des Werkstücks aus der Preform.

Bei einer besonders bevorzugten Ausführungsform der Erfindung wird eine Kompaktierrolle oder sonstige Faserauftragrolle mit einer internen Lichtquelle in Form einer LED und mit einer Fokussierlinse ausgerüstet, um die Faser direkt zu bestrahlen. Die Rolle besteht dabei aus einem transparenten Material oder weist ein entsprechendes Rollelement aus derartigem transparentem Material auf. Die Abstände zwischen den Linsen und der LED werden vorzugsweise so eingestellt, dass der Fokuspunkt direkt auf der Oberfläche der Rolle liegt. Da die Fasern über die Oberfläche gelenkt werden, liegen sie damit direkt im Fokuspunkt.

Einige Vorteile von bevorzugten Ausgestaltungen der Erfindung sind:
- eine Kompaktierrolle bleibt nach außen hin kalt;
- die Aktivierungseinheit oder Aktivierungseinrichtung ist sehr kompakt im Vergleich zu anderen Lösungen;
- eine Lichtemission der Faserverlegevorrichtung ist gering;
- eine Lichtquelle lässt sich gut und schnell regeln;
- beim Ablegen mit Binder wird nicht der Binder bestrahlt, sondern die Faser.

Eine geringe Lichtemission der Anlage ist insbesondere bei Anlagen mit optischer Inline-Qualitätssicherung sehr vorteilhaft.

Ausführungsbeispiele der Erfindung werden nachfolgend anhand der beigefügten Zeichnungen näher erläutert. Darin zeigt:
- Fig. 1: eine schematische Darstellung einer Faserverlegevorrichtung zum automatischen Verlegen von Fasern;
- Fig. 2: eine schematische Seitenansicht zur Darstellung des Prinzips des automatischen Faserverlegens und einiger Einrichtungen an dem Verlegekopf der Faserverlegevorrichtung einschließlich eines Faserauftragwerkzeugs;
- Fig. 3: eine Schnittdarstellung einer ersten Ausführungsform eines Faserauftragwerkzeugs;
- Fig. 4: eine Schnittdarstellung durch ein Faserauftragwerkzeug gemäß einer zweiten Ausführungsform;
- Fig. 5: eine schematische perspektivische Darstellung einer weiteren Ausführungsform des Faserauftragwerkzeugs; und
- Fig. 6: eine schematische perspektivische Darstellung einer weiteren Ausführungsform des Faserauftragwerkzeugs.

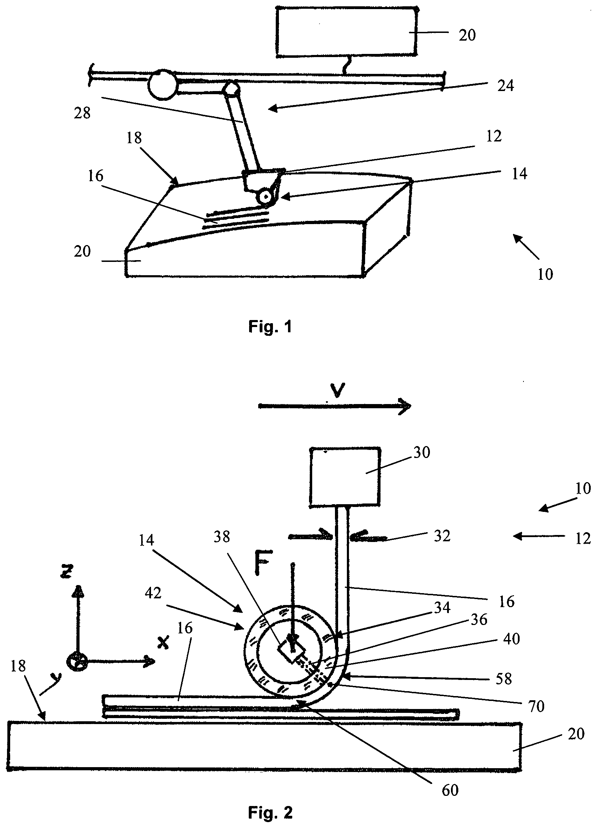

In den Figuren 1 und 2 ist eine Faserverlegevorrichtung 10 bei der Durchführung eines automatischen Faserverlegeverfahrens, insbesondere eines AFP-Verfahrens oder Fibre-Placement-Verfahrens, schematisch dargestellt. Dabei ist in Fig. 1 eine Übersichtsdarstellung der Faserverlegevorrichtung 10 gezeigt, während in Fig. 2 eine Detaildarstellung eines Verlegekopfes 12 mit einem Faserauftragwerkzeug 14 schematisch näher gezeigt ist.

Die Faserverlegevorrichtung 10 ist zum automatischen Verlegen von Fasern 16 auf einer Arbeitsoberfläche 18 ausgebildet. Insbesondere ist die Faserverlegevorrichtung zum Verlegen von Fasern 16 auf einer Oberfläche eines Formwerkzeuges 20 ausgebildet. Hierzu weist die Faserverlegevorrichtung 10 eine Steuerung 22 auf, in der ein entsprechender Ablegeplan zum Ablegen von Fasern 16 auf der entsprechend von der Form her bekannten Arbeitsoberfläche 18 abgelegt ist. Die Fasern 16 werden in vorbestimmen Bahnen und mit vorbestimmter Anzahl verlegt.

Die Fasern 16 können in unterschiedlicher Form vorkommen, z.B. kann unterschiedliches Fasermaterial, wie z.B. Faserbänder, aufgespreizte Faserbündel, Fasergewegebe oder dergleichen zum Einsatz kommen, wobei das Fasermaterial bereits bei der Bearbeitung in dem Verlegekopf 12 mit einem durch aktivierbaren Haftmaterial, Matrixmaterial, Bindermaterial oder Harzmaterial versehen ist. Z.B. kann ein Prepreg-Fasergewebeband oder ein bebindertes Faserband geliefert werden.

Hierzu weist die Faserverlegevorrichtung 10 einen Bewegungsapparat 24 auf, mit dem der Verlegekopf 12 mit dem Faserauftragwerkzeug 14 in bestimmten Bahnen entlang der Arbeitsoberfläche 18 verfahrbar ist. Der Bewegungsapparat 24 weist zum Beispiel einen Roboterarm 26 auf. Damit ist der Verlegekopf 12 in X-Richtung, Z-Richtung und Y-Richtung bewegbar; außerdem ist er in einer gewünschten Orientierung verdrehbar. In Fig. 2 ist der Verlegekopf 12 entsprechend seiner Bewegung mit einem Geschwindigkeitsvektor v angedeutet.

An dem Verlegekopf 12 ist eine Faserliefereinrichtung 30 zum Liefern der Fasern 16 noch in Endlosform und eine Schneideinrichtung 32 zum Schneiden der Fasern 16 auf eine gewünschte Länge vorgesehen.

Weiter weist das Faserauftragwerkzeug 14 eine Faserkontaktfläche 34 auf, die die zu verlegenden Fasern 16 kontaktiert, um sie umlenken, auf die Arbeitsoberfläche 18 aufzutragen und dort unter Druck anzupressen und zu kompaktieren.

Wie oben bereits erwähnt werden die Fasern 16 mit einem aktivierbaren Haftmaterial, Matrixmaterial, Harzmaterial oder Bindermaterial angeliefert, welches durch Wärme und insbesondere mittels einer Aktivierungsstrahlung 36 aktivierbar ist. Die Aktivierungsstrahlung 36 ist vorzugsweise in Form einer Lichtstrahlung oder Infrarot-Strahlung ausgebildet.

Hierzu weist das Faserauftragwerkzeug 14 eine Aktivierungseinrichtung 38 zum Liefern der Aktivierungsstrahlung 36 auf.

Die Faserkontaktfläche 34 ist an einem Faserkontaktflächenbereich 40 des Faserauftragwerkzeugs 14 ausgebildet, wobei der Faserkontaktflächenbereich 40 für die Aktivierungsstrahlung 36 transparent ist.

Die Aktivierungseinrichtung 38 ist derart ausgebildet, dass sie die Aktivierungsstrahlung 36 von hinten, von der der Faserkontaktfläche 34 entgegengesetzten Seite des Faserkontaktflächenbereichs 40 aus durch den Faserkontaktflächenbereich 40 hindurch zu der Faserkontaktfläche 34 strahlt, um die an der Faserkontaktfläche 34 angreifenden Fasern 16 zu bestrahlen und somit das entsprechende Haftmaterial oder Bindermaterial zu aktivieren.

Das Faserauftragwerkzeug 14 weist insbesondere eine Faserauftrag- und/oder Kompaktierungsrolle 42 auf. Die Faserkontaktfläche 34 ist an einem Umfangsbereich der Faserauftrag- und/oder Kompaktierungsrolle 42 ausgebildet. Mit anderen Worten bildet ein Umfangsbereich - wie z.B. eine Umfangswandung - der Faserauftrag- und/oder Kompaktierungsrolle 42 den Faserkontaktflächenbereich 40 und ist zumindest teilsweise aus für die Aktivierungsstrahlung 36 transparentem Material ausgebildet. Die Faserauftrag- und/oder Kompaktierungsrolle 42 ist an dem Verlegekopf 12 drehbar gelagert und kann durch Verfahren des Verlegekopfs 12 entlang der Arbeitsoberfläche 18 auf der Arbeitsoberfläche 18 abrollen. Dabei lenkt sie, wie in Fig. 2 dargestellt, die Fasern 16 kommend von der Faserliefereinrichtung 30 aus um und presst sie auf die Arbeitsoberfläche 18.

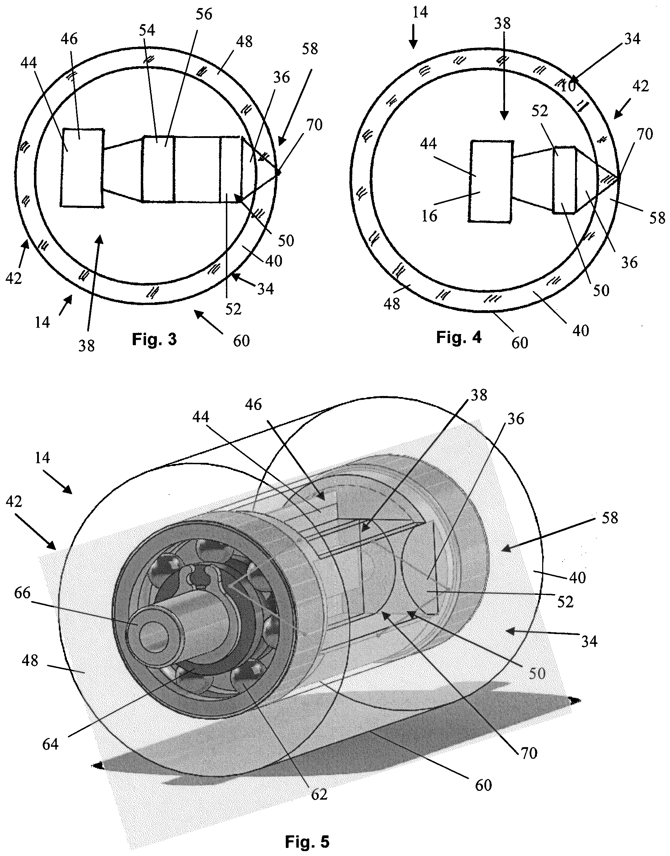

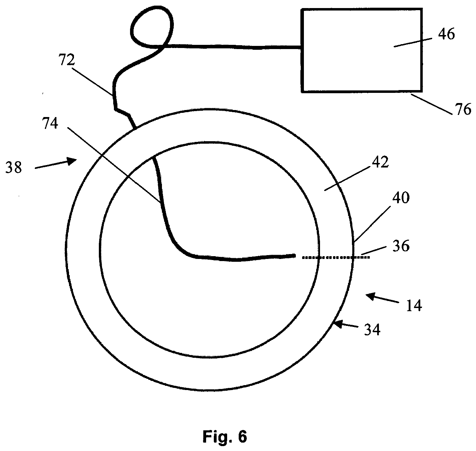

Die Aktivierungseinrichtung 38 weist insbesondere eine Lichtquelle 44, vorzugsweise in Form wenigstens einer LED 46 auf. Die in den Fig. 3 bis 5 dargestellten Ausgestaltungen sind jedoch so ausgebildet, dass die Lichtquelle 44 oder LED 46 intern in der Faserauftrag- und/oder Kompaktierungsrolle 42 angeordnet ist. Bei der in der Fig. 6 dargestellten Ausführungsform weist die Aktivierungseinrichtung 38 eine Leiteinrichtung 72, wie insbesondere eine Glasfaser 74 oder einen Lichtleiter auf, mittels der in einer externen Strahlungsquelle 76, wie z.B. einer externen LED, erzeugte Aktivierungsstrahlung in den Innenbereich der Faserauftrag- und Kompaktierungsrolle 42 geleitet werden kann.

Insbesondere bilden so die Faserauftrag- und/oder Kompaktierungsrolle 42 und die Aktivierungseinrichtung 38 eine sehr kompakte Einheit. Somit kann das Faserauftragwerkzeug 14 von seinen Außenabmaßen auf die Außenabmaße der Faserauftrag- und/oder Kompaktierungsrolle 42 beschränkt sein. Z.B. beträgt das größte Außenmaß - z.B. gebildet durch einen Durchmesser der Rolle 42 - weniger als 10 cm, insbesondere weniger als 5 cm und mehr insbesondere ca. 2 cm (+/-0,5 cm).

Die Figuren 3, 4 und 6 zeigen mögliche unterschiedliche Ausgestaltungen des Faserauftragwerkzeugs 14.

Demnach weist die Faserauftrag- und/oder Kompaktierungsrolle 42 einen mit einem Zylindermantel (Beispiel für eine Umfangswandung) versehenen Rollkörper oder Rohrkörper 48 aus transparentem Kunststoff oder aus Glas oder aus sonstigem für die Aktivierungsstrahlung 36 transparentem, widerstandsfähigem und kompaktierfestem Material auf. Im Inneren dieses Rohrkörpers 48 oder Rollkörpers ist die LED 46 oder der Ausgang der Lichtleiteinrichtung 72 vorgesehen. Weiter kann eine Fokussiereinrichtung 50 zum Fokussieren der Aktivierungsstrahlung 36 auf die Außenoberfläche des Rohrkörpers 48 vorgesehen werden. Der Rohrkörper 48 bildet den Faserkontaktflächenbereich 40; und die äußere Umfangsoberfläche des Rohrkörpers 48 bildet die Faserkontaktfläche 34. Die Fokussiereinrichtung 50 liefert insbesondere einen Fokuspunkt unmittelbar an dieser Außenoberfläche und damit der Faserkontaktfläche 34. Es ist auch möglich, je nach Dicke der zuliefernden Fasern 16, den Fokussierpunkt in den Nahbereich kurz außerhalb der äußeren Umfangsfläche zu legen und somit in das Innere der daran angreifenden Fasern 16 zu legen.

Die Fokussiereinrichtung 50 kann ein oder mehrere Fokussierlinsen 52 aufweisen.

Gemäß einer weiteren Ausgestaltung kann, wie dies in Fig. 4 angedeutet ist, eine Kollimatoreinrichtung 54 mit wenigstens einer Kollimatorlinse 56 vorgesehen sein. Auf die Fokussiereinrichtung kann aber auch vollständig verzichtet werden, wie dies in Fig. 6 angedeutet ist. Wenngleich letztere Option ohne Fokussiereinrichtung am Beispiel mit der externen Strahlungserzeugung und Leiteinrichtung gezeigt ist, ist dies bei genügend starker Strahlung auch bei den Ausgestaltungen mit interner Strahlungserzeugung möglich.

Wie in Fig. 2 dargestellt, ist die Aktivierungseinrichtung 38 vorzugsweise so ausgerichtet, dass sie die Aktivierungsstrahlung 36 in den Umlenkungsbereich 58 hinein ausstrahlt, wo die Fasern 16 umgelenkt werden, und der sich in Rollrichtung kurz vor dem Kontaktpunkt 60 befindet, wo die Fasern 16 mittels der Faserauftrag- und/oder Kompaktierungsrolle 42 auf die Arbeitsoberfläche 18 gepresst werden. Der Verlegekopf 12 presst die Fasern 16 mittels des Rohrkörpers 48 mit der Kraft F auf die Arbeitsoberfläche 18, während er mit der Geschwindigkeit v über die die Arbeitsoberfläche 18 bewegt wird.

Ein möglicher konkreter Aufbau des Faserauftragwerkzeugs 14 ist in Fig. 5 dargestellt.

Hier ist der äußere Rohrkörper 48 mittels Kugellagern 62 drehbar an einem Lagerabschnitt 64 gelagert, der mittels einer Befestigungseinheit 66 stationär zu einer Positioniereinrichtung an dem Verlegekopf 12 befestigt werden kann. An dem Lagerabschnitt 64 ist im Inneren des transparenten Rohrkörpers 48 die Aktivierungseinrichtung 38 mit der LED 46 und der Fokussiereinrichtung 50 vorgesehen.

Durch entsprechende Positionierung der Befestigungseinrichtung 66 kann die Lage und die Strahlrichtung der Aktivierungseinrichtung 38 eingestellt werden. Das Faserauftragen und Kompaktieren erfolgt durch Abrollen des Rohrkörpers 48 mittels der an dem Außenumfang des Rohrkörpers 48 ausgebildeten Faserkontaktfläche 34.

Mit der entsprechenden Faserverlegevorrichtung 10 ist ein sehr vorteilhaftes automatisches Fibre-Placement-Verfahren durchführbar. Die Aktivierungseinrichtung 38 befindet sich im Inneren der Faserauftrag- und/oder Kompaktierungsrolle 42; dadurch ist der Verlegekopf 12 sehr kompakt ausgeführt, und die Aktivierungseinrichtung 38 ist geschützt untergebracht.

Die Aktivierungsstrahlung 36 kann sehr dosiert und mit geringer Strahlungsintensität ausgerichtet werden. Es ist entsprechend weniger Energieeintrag notwendig.

Hierdurch lässt sich, wie in Fig. 1 dargestellt, insbesondere eine Preform eines aus faserverstärktem Verbundmaterial hergestellten Werkstückes herstellen. Das Formwerkzeug 20 mit der darauf durch die Ablegung der Fasern 16 hergestellten Preform kann dann in weiteren - vom Prinzip her bekannten - Prozessen durch entsprechendes Tränken mit Harz-Matrix-Material und der gleichen hergestellt werden.

Wenngleich das Faserauftragwerkzeug 14 und die damit versehene Faserverlegevorrichtung 10 am Beispiel von AFP-Verfahren mit einer Rolle zum Aufpressen von Fasern erläutert worden sind, so ist die Erfindung nicht auf entsprechend für das Durchführen eines AFP-Verfahrens konzipierte Werkzeuge oder Vorrichtungen oder Verfahren beschränkt. Z.B. könnte die Idee einer Aktivierung mittels durch eine transparente Faserkontaktfläche hindurch geleiteten Aktivierungsstrahlen auch an anderen Legevorrichtungen, wie z.B. einem Legestempel, mit anderen Formen von Faserkontaktflächen realisiert werden, insbesondere bei sogenannten Faser-Patch-Preforming-Verfahren, wie sie in der WO2008/110614 gezeigt und beschrieben sind.

### Bezugszeichenliste:

- 10: Faserverlegevorrichtung
- 12: Verlegekopf
- 14: Faserauftragwerkzeug
- 16: Faser
- 18: Arbeitsoberfläche
- 20: Formwerkzeug
- 22: Steuerung
- 24: Bewegungsapparat
- 28: Roboterarm
- 30: Faserliefereinrichtung
- 32: Schneideinrichtung
- 34: Faserkontaktfläche
- 36: Aktivierungsstrahlung
- 38: Aktivierungseinrichtung
- 40: Faserkontaktflächenbereich
- 42: Faserauftrag- und/oder Kompaktierungsrolle
- 44: Lichtquelle
- 46: LED
- 48: Rohrkörper
- 50: Fokussiereinrichtung
- 52: Fokussierlinse
- 54: Kollimatoreinrichtung
- 56: Kollimatorlinse
- 58: Umlenkungsbereich
- 60: Kontaktbereich
- 62: Kugellager
- 64: Lagerabschnitt
- 66: Befestigungseinrichtung
- 68: Preform
- 70: Fokuspunkt
- 72: Leiteinrichtung
- 74: Glasfaser
- 76: externe Strahlungsquelle, z.B. externer Lichtgenerator, wie LED

## Patentansprüche

1. Faserauftragwerkzeug (14) für einen Faserverlegeprozess, mit einem Faserkontaktflächenbereich (40), der eine Faserkontaktfläche (34) zum Kontaktieren von Fasern (16) zwecks Umlenken und/oder Anpressen der Fasern (16) zum Auftragen (16) auf eine Arbeitsoberfläche (18) hat, und mit einer Aktivierungseinrichtung (38) zum Aktivieren eines an den Fasern (16) vorgesehenen Haft-, Matrix-, Harz- oder Bindermaterials mittels einer Aktivierungsstrahlung (36), um ein Anhaften der Fasern (16) auf der Arbeitsoberfläche (18) zu bewirken,
wobei der Faserkontaktflächenbereich (40) für die Aktivierungsstrahlung (36) transparent ist und wobei die Aktivierungseinrichtung (38) ausgebildet und eingerichtet ist, die Aktivierungsstrahlung (36) durch den transparenten Faserkontaktflächenbereich (40) hindurch zu den mittels der Faserkontaktfläche (34) anzupressenden Fasern (16) zu leiten und/oder zu liefern,
wobei die Faserkontaktfläche (34) am Umfang einer Faserauftrag- und/oder Kompaktierungsrolle (42) ausgebildet ist,
**dadurch gekennzeichnet,**
**dass** wenigstens ein die Faserkontaktfläche (34) aufweisender Umfangsflächenbereich der Faserauftrag- und/oder Kompaktierungsrolle (42) transparent ausgebildet ist und dass die Aktivierungseinrichtung (38) dazu ausgebildet und eingerichtet ist, die Aktivierungsstrahlung (36) vom Inneren der Faserauftrags- und/oder Kompaktierungsrolle (42) aus durch den transparenten Umfangsflächenbereich auf die zu aktivierenden, im bestimmungsgemäße Gebrauch den Umfangsflächenbereich kontaktierenden Fasern (16) zu leiten,
wobei die die Aktivierungseinrichtung (38)
eine interne Lichtquelle (44) in dem Faserauftragwerkzeug zum Liefern von Aktivierungsstrahlung oder
eine interne LED (46) in dem Faserauftragwerkzeug (34) zum Liefern der Aktivierungsstrahlung (36) oder
eine Leiteinrichtung (72) zum Liefern von Aktivierungsstrahlung von einer externen Strahlungsquelle (76) in das Innere des Faserauftragwerkzeugs (34) aufweist und
wobei die Aktivierungseinrichtung (38) eine Fokussiereinrichtung (50) zum Fokussieren der Aktivierungsstrahlung (36) auf die Faserkontaktfläche (34) oder in einen Nahbereich nahe der Faserkontaktfläche (34) aufweist.

2. Faserauftragwerkzeug nach Anspruch 1,
**dadurch gekennzeichnet,**
**dass** eine die Faserkontaktfläche (34) bildende zylindermantelförmige umlaufende Umfangswandung der Faserauftrag- und/oder Kompaktierrolle (42) aus transparentem Material, aus transparentem Kunststoff und/oder aus Glas gebildet ist.

3. Faserauftragwerkzeug nach Anspruch 1 oder 2,
**dadurch gekennzeichnet,**
**dass** die Faserauftrag- und/oder Kompaktierrolle (42) einen nicht drehbaren inneren Lagerabschnitt (64), der an einem Bewegungsapparat (24) zum relativen Bewegen über die Arbeitsoberfläche (18) anzubringen ist, und einen relativ zu dem Lagerabschnitt (64) drehbaren den Lagerabschnitt (64) umfänglich umgebenden Rohrkörper (48) oder Rollenkörper aufweist, der zumindest teilweise aus transparenten Material gebildet ist, wobei die Aktivierungseinrichtung (38) an dem inneren Lagerabschnitt angeordnet ist.

4. Faserauftragwerkzeug nach einem der Ansprüche 1 bis 3,
**dadurch gekennzeichnet,**
**dass** die Aktivierungseinrichtung (38) derart ausgebildet und eingerichtet ist, dass die Aktivierungsstrahlung (36) durch den transparente Umfangsbereich in einem Umlenkungsbereich (58) geleitet wird, an dem Fasern (16) an der Rolle (42) umgelenkt werden und der in Rollrichtung vor dem Kontaktbereich (60) liegt, wo die Fasern (16) auf die Arbeitsoberfläche kontaktierend aufgepresst werden.

5. Faserauftragwerkzeug nach einem der voranstehenden Ansprüche,
**dadurch gekennzeichnet,**
**dass** die Fokussiereinrichtung (50) wenigstens eine Fokussierlinse (52) aufweist, um die die Faserkontaktfläche (34) kontaktierenden Fasern (16) durch den transparenten Faserkontaktflächenbereich (40) hindurch direkt zu bestrahlen.

6. Faserauftragwerkzeug nach Anspruch 5,
**dadurch gekennzeichnet,**
**dass** der Abstand zwischen der Lichtquelle (44) oder der LED (46) oder der Leiteinrichtung (72) einerseits und der wenigstens einen Fokussierlinse (52) andererseits so gewählt ist, dass der Fokuspunkt (70) direkt auf der Faserkontaktfläche (34) liegt.

7. Faserauftragwerkzeug nach einem der voranstehenden Ansprüche,
**dadurch gekennzeichnet,**
**dass** die interne Lichtquelle (44) oder LED (46) oder ein Ausgang der Lichtleiteinrichtung in der Faserauftrag- und/oder Kompaktierrolle (42) angeordnet sind.

8. Faserauftragswerkzeug nach einem der voranstehenden Ansprüche,
**dadurch gekennzeichnet,**
**dass** die Fokussiereinrichtung (50) in der Faserauftrag- und/oder Kompaktierrolle (42) angeordnet ist.

9. Automatische Faserverlegevorrichtung (10) zum automatischen Verlegen von Fasern (16) auf einer Arbeitsoberfläche (18), umfassend:
eine Faserliefereinrichtung (30) zum Liefern von Fasern (16),
ein Faserauftragwerkzeug (14) nach einem der voranstehenden Ansprüche,
eine Schneideinrichtung (32) zum Schneiden der Fasern (16) auf eine gewünschte Länge,
und einen Bewegungsapparat (24) zum Bewegen des Faserauftragwerkzeugs (14) relativ zu der Arbeitsoberfläche (18), um die von der Faserliefereinrichtung (30) gelieferten Fasern (16) auf der Arbeitsoberfläche (18) aufzutragen und aufzupressen.

10. Faserverlegeverfahren zum automatischen Verlegen von Fasern (16) auf einer Arbeitsoberfläche (18), umfassend:
a) Auftragen und Anpressen von mit Haft-, Binder-, Matrix- oder Harzmaterial versehenen Fasern (16) mit einer transparenten Faserkontaktfläche (34) durch Auftragen und Anpressen der Fasern (16) mittels einer Faserauftrags- und/oder Kompaktierungsrolle (42), die wenigstens einen transparenten Umfangsflächenbereich aufweist, und
b) Leiten von Aktivierungsstrahlung (36) durch den transparenten Umfangsflächenbereich als Faserkontaktfläche (34) hindurch zum Aktivieren des Haft-, Binder-, Matrix- oder Harzmaterials,
und weiter umfassend:
Liefern der Fasern (16) zu der Faserauftrags- und/oder Kompaktierungsrolle (42) und Umlenken der Fasern (16) an einem Umlenkungsbereich (58) bis hin zu einem Kontakt mit der Arbeitsfläche (18),
**dadurch gekennzeichnet,**
**dass** die Aktivierungsstrahlung durch den Umlenkungsbereich noch vor dem Kontakt mit der Arbeitsoberfläche (18) auf die Fasern (16) fokussiert geleitet wird.

11. Herstellverfahren zum Herstellen von Verbundwerkstoffwerkstücke **gekennzeichnet durch**
Herstellen einer Preform (68) durch Durchführen des automatischen Faserverlegeverfahrens nach Anspruch 10, und
Herstellen des Werkstücks aus der Preform (68).

## Claims

1. Fibre application tool (14) for a fibre laying process, comprising a fibre laying contact surface area (40) having a fibre contact surface (34) for contacting fibres (16) for the purpose of redirecting and/or pressing-on said fibres (16) for applying the fibres (16) to a working surface (18), and comprising an activation device (38) for activating an adhesion, matrix, resin or binder material by means of an activation radiation (36) to cause the fibres (16) to adhere to said working surface (18),
wherein said fibre contact surface area (40) is transparent to said activation radiation (36) and wherein said activation device (38) is constructed and adapted for directing and/or delivering said activation radiation (36) through said transparent fibre contact surface area (40) to the fibres (16) to pressed-on by means of said fibre contact surface (34),
wherein said fibre contact surface (34) is formed on the periphery of a fibre application and/or compacting roller (42),
**characterized in**
**that** at least a portion of the peripheral surface area of said fibre application and/or compacting roller (42) including said fibre contact surface (34) is designed to be transparent and that said activation device (38) is constructed and adapted to direct said activation radiation (36) from the interior of said fibre application and/or compacting roller (42) through said transparent peripheral surface area to the fibres (16) to be activated and contacting said peripheral surface area under normal conditions of use,
wherein said activation device (38) comprises
an internal light source (44) in said fibre application tool for providing an activation radiation or
an internal LED (46) in said fibre application tool (34) for providing said activation radiation (36) or
a guiding device (72) for guiding activation radiation from an external
radiation source (76) to the interior of said fibre application tool (34) and wherein said activation device (38) includes a focusing device (50) for focusing said activation radiation (36) onto the fibre contact surface (34) or to a close range near said fibre contact surface (34).

2. Fibre application tool according to claim 1,
**characterized in that** a cylinder casing-shaped continuous circumferential wall of said fibre application and/or compacting roller (42) forming said fibre contact surface (34) is made of a transparent material, a transparent plastic material and/or glass.

3. Fibre application tool according to claim 1 or 2,
**characterized in that** said fibre application and/or compacting roller (42) comprises a non-rotatable inner bearing portion (64) to be attached to a motion apparatus (24) for a relative movement thereof over the working surface (18), and a tubular body (48) or a roller body peripherally surrounding said bearing portion (64) and rotatable relative to said bearing portion (64), said roller body being at least partially formed from a transparent material, wherein said activation device (38) is disposed on said inner bearing portion.

4. Fibre application tool according to one of the claims 1 to 3,
**characterized in that** said activation device (38) is constructed and adapted in such a manner that said activation radiation (36) is directed through said transparent peripheral area in a redirection area (58) where fibres (16) on said roller (42) are redirected and which is situated upstream from said contact area (60) in the rolling direction where said fibres (16) are pressed onto the working surface in a contacting manner.

5. Fibre application tool according to one of the preceding claims,
**characterized in that** said focusing device (50) comprises at least one focusing lens (52) for radiating the fibres (16) contacting the fibre contact surface (34) through said transparent fibre contacting surface area (40).

6. Fibre application tool according to claim 5,
**characterized in that** the distance between the light source (44) or LED (46) of the guiding device (72) on one side and said at least one focusing lens (52) on the other side is chosen in such a manner that the focal point (70) lies directly on the fibre contact surface (34).

7. Fibre application tool according to any one of the preceding claims,
**characterized in that** said internal light source (44) or LED (48) or an output of the light directing device are arranged in said fibre application and/or compacting roller (42).

8. Fibre application tool according to any one of the preceding claims,
**characterized in that** said focusing device (50) is disposed in said fibre application and/or compacting roller (42).

9. Automatic fibre laying device (10) for automatically laying fibres (16) on a working surface (18), comprising:
a fibre delivery device (30) for delivering fibres (16);
a fibre application tool (14) according to any one of the preceding claims,
a cutting device (32) for cutting the fibres (16) to a desired length,
and a motion apparatus (24) for moving the fibre application tool (14) relative to the working surface (18) in order to apply and press the fibres (16) delivered from the fibre delivery device (30) onto the working surface (18).

10. Fibre laying method for automatically laying fibres (16) on a working surface (18), comprising:
a) applying and pressing-on fibres (16) provided with adhesion, binding, matrix and resin material with a transparent fibre contact surface (34) by applying and pressing-on said fibres (16) by means of a fibre application and/or compacting roller (42) that comprises at least one transparent circumferential surface area and
b) directing an activation radiation (36) through said transparent circumferential surface area as a fibre contact surface (34) for activating said adhesion, binding, matrix or resin material,
and further comprising:
delivering the fibres (16) to the fibre application and/or compacting roller (42) and redirecting the fibres (16) on a redirection area (58) up to a contact with the working surface (18),
**characterized in that** said activation radiation is directed to the fibres (16) in a focused manner through said redirection area still before contacting said working surface (18).

11. Production method for producing composite material work pieces,
**characterized by** producing a preform (68) by carrying out the automatic fibre laying process according claim 10,
and producing the work piece from said preform (68).

## Revendications

1. Outil d'application de fibres (14) pour un processus de pose de fibres, comportant une zone de surface de contact de fibres (40) qui possède une surface de contact de fibres (34) pour venir en contact avec des fibres (16) afin de renvoyer et/ou de presser les fibres (16) à appliquer (16) sur une surface de travail (18), et comportant un dispositif d'activation (38) pour activer un matériau d'adhérence, un matériau formant matrice, un matériau à base de résine ou un liant prévu sur les fibres (16) au moyen d'un rayonnement d'activation (36) pour provoquer une adhérence des fibres (16) sur la surface de travail (18),
dans lequel la zone de surface de contact de fibres (40) est transparente vis-à-vis du rayonnement d'activation (36) et le dispositif d'activation (38) est réalisé et conçu pour diriger et/ou envoyer le rayonnement d'activation (36) à travers la zone de surface de contact de fibres transparente (40) jusqu'aux fibres (16) à presser au moyen de la surface de contact de fibres (34),
dans lequel la surface de contact de fibres (34) est réalisée à la périphérie d'un rouleau d'application et/ou de compactage de fibres (42),
**caractérisé en ce que**
au moins une zone de surface périphérique du rouleau d'application et/ou de compactage de fibres (42), laquelle présente la surface de contact de fibres (34), est réalisée transparente, et **en ce que** le dispositif d'activation (38) est réalisé et conçu pour diriger le rayonnement d'activation (36) depuis l'intérieur du rouleau d'application et/ou de compactage de fibres (42) à travers la zone de surface périphérique transparente jusqu'aux fibres (16) à activer venant en contact avec la zone de surface périphérique lors d'une utilisation conforme à sa destination,
dans lequel le dispositif d'activation (38) comprend
une source de lumière interne (44) dans l'outil d'application de fibres pour fournir le rayonnement d'activation ou
une diode électroluminescente interne (46) dans l'outil d'application de fibres (34) pour fournir le rayonnement d'activation (36) ou
un dispositif de guidage (72) pour fournir un rayonnement d'activation depuis une source de rayonnement externe (76) jusque dans l'intérieur de l'outil d'application de fibres (34), et
dans lequel le dispositif d'activation (38) comprend un dispositif de focalisation (50) pour focaliser le rayonnement d'activation (36) sur la surface de contact de fibres (34) ou dans une zone proche à proximité de la surface de contact de fibres (34).

2. Outil d'application de fibres selon la revendication 1,
**caractérisé en ce que**
une paroi périphérique en forme d'enveloppe cylindrique formant la surface de contact de fibres (34) du rouleau d'application et/ou de compactage de fibres (42) est formée en un matériau transparent, en une matière plastique transparente et/ou en verre.

3. Outil d'application de fibres selon la revendication 1 ou 2,
**caractérisé en ce que**
le rouleau d'application et/ou de compactage de fibres (42) comprend une portion formant palier (64) interne non rotative qui est à agencer sur un appareil de déplacement (24) destiné au déplacement relatif par-dessus la surface de travail (18), et un corps tubulaire (48) ou un corps formant rouleau rotatif par rapport à la portion formant palier (64) et entourant à la périphérie la portion formant palier (64), corps qui est constitué au moins partiellement en matériau transparent, le dispositif d'activation (38) étant agencé sur la portion formant palier interne.

4. Outil d'application de fibres selon l'une des revendications 1 à 3,
**caractérisé en ce que**
le dispositif d'activation (38) est réalisé et conçu de telle sorte que le rayonnement d'activation (36) est dirigé à travers la zone périphérique transparente jusque dans une zone de renvoi (58) sur laquelle des fibres (16) sont renvoyées sur le rouleau (42) et qui se trouve en avant de la zone de contact (60) en direction de roulement, où les fibres (16) sont pressées en contact sur la surface de travail.

5. Outil d'application de fibres selon l'une des revendications précédentes,
**caractérisé en ce que**
le dispositif de focalisation (50) comprend au moins une lentille de focalisation (52) pour irradier directement les fibres (16), venant en contact avec la surface de contact de fibres (34), à travers la zone de surface de contact de fibres (40) transparente.

6. Outil d'application de fibres selon la revendication 5,
**caractérisé en ce que**
la distance entre la source de lumière (44) ou la diode électroluminescente (46) ou le dispositif de guidage (72) d'une part et ladite au moins une lentille de focalisation (52) d'autre part est choisie de telle sorte que le point focal (70) se trouve directement sur la surface de contact de fibres (34).

7. Outil d'application de fibres selon l'une des revendications précédentes,
**caractérisé en ce que**
la source de lumière interne (44) ou la diode électroluminescente (46) ou une sortie du dispositif de guidage de lumière est agencée dans le rouleau d'application et/ou de compactage de fibres (42).

8. Outil d'application de fibres selon l'une des revendications précédentes,
**caractérisé en ce que**
le dispositif de focalisation (50) est agencé dans le rouleau d'application et/ou de compactage de fibres (42).

9. Dispositif automatique de pose de fibres (10) pour la pose automatique de fibres (16) sur une surface de travail (18), comportant :
un dispositif de délivrance de fibres (30) pour délivrer des fibres (16),
un outil d'application de fibres (14) selon l'une des revendications précédentes,
un dispositif de coupe (32) pour couper les fibres (16) à une longueur désirée,
et un appareil de déplacement (24) pour déplacer l'outil d'application de fibres (14) par rapport à la surface de travail (18), afin d'appliquer et de presser sur la surface de travail (18) les fibres (16) délivrées par le dispositif de délivrance de fibres (30).

10. Procédé de pose de fibres pour poser automatiquement des fibres (16) sur une surface de travail (18), consistant à :
a) appliquer et presser des fibres (16), munies d'un matériau d'adhérence, d'un liant, d'un matériau formant matrice ou d'un matériau à base de résine, au moyen d'une surface de contact de fibres (34) transparente en appliquant et pressant les fibres (16) au moyen d'un rouleau d'application et/ou de compactage de fibres (42) qui présente au moins une zone de surface périphérique transparente, et
b) diriger un rayonnement d'activation (36) à travers la zone de surface périphérique transparente à titre de surface de contact de fibres (34) pour activer le matériau d'adhérence, le liant, le matériau formant matrice ou le matériau à base de résine,
et consistant en outre à
délivrer les fibres (16) au rouleau d'application et/ou de compactage de fibres (42) et renvoyer les fibres (16) sur une zone de renvoi (58) jusqu'à venir en contact avec la surface de travail (18),
**caractérisé en ce que**
le rayonnement d'activation est dirigé par la zone de renvoi encore avant de venir en contact avec la surface de travail (18), en étant focalisé sur les fibres (16).

11. Procédé de fabrication de pièces en matériau composite,
**caractérisé par**
la fabrication d'une préforme (68) par mise en oeuvre du procédé de pose de fibres automatique selon la revendication 10, et
la fabrication de la pièce à partir de la préforme (68).
